# EUROPÄISCHE PATENTANMELDUNG

(11) **EP 1 134 677 A1**
(43) Veröffentlichungstag der Anmeldung: **19.09.2001**
(21) Anmeldenummer: 00105198.6
(22) Anmeldetag: 13.03.2000
(51) Int. Cl.: G06F 17/60

(54) **Rechner, rechnergestütztes Verfahren und Rechnerprogramm-Produkt zur Verwaltung eines Prämiensystems**

(71) Anmelder: Loyalty Partner GmbH, 80637 München (DE)
(72) Erfinder: Peters, Ralf, c/o LOYALTY PARTNER Gesellschaft, 70173 Stuttgart (DE)
(74) Vertreter: Lippich, Wolfgang, Dipl.-Pys., Dr.rer.nat.

(57) **Zusammenfassung**

Die Erfindung betrifft ein Computersystem (5) ein Verfahren und ein Computerprogramm-Produkt zum Management eines Prämiensystems, bei dem Kunden bei geschäftlichen Transaktionen Prämienpunkte erhalten, mit einem Computer (8) mit Speicher (9), der auf Punktekonten die Prämienpunkte akkumuliert, welche der jeweilige Kunde durch geschäftliche Transaktionen erworben hat, und der die akkumulierten Punkte speichert. Die Erfindung ist gemäß einem ersten Aspekt dadurch gekennzeichnet, daß der Computer (8) und dessen Speicher (9) so eingerichtet sind, daß mehrere Prämienkarten einem gemeinsamen Punktekonto zugeordnet werden können, und die mit den mehreren Prämienkarten erhaltenen Prämienpunkte dem gemeinsamen Punktekonto gutgeschrieben werden. Gemäß einem zweiten Aspekt hat das Computersystem zwei Untersysteme: ein operatives Untersystem, welches Punktekonten einzelner Kunden und/oder Prämienkarten, nicht jedoch detaillierte Transaktionseinzeldaten speichert; und ein Datenauswertungs-Untersystem, welches detaillierte Transaktionseinzeldaten speichert, Kennzeichnungsdaten des Kunden bzw. der Prämienkarte, der bzw. die zu der jeweiligen Einzeltransaktion gehört, aber nur in verschlüsselter Form speichert.

## Beschreibung

Die Erfindung betrifft Computersysteme, computergestützte Verfahren und ein Computerprogramm-Produkt zum Management eines Prämiensystems, bei dem Kunden bei geschäftlichen Transaktionen Prämienpunkte erhalten.

Prämien- oder Rabattsysteme waren bereits lange vor dem Aufkommen von Computern bekannt. Sie dienten damals wie heute der Bindung von Kunden an einen bestimmten Anbieter. Hierzu räumt der Anbieter dem Kunden bei einer geschäftlichen Transaktion (z.B. Kauf oder Miete einer Ware, Inanspruchnahme einer Dienst- oder Werkleistung) Prämienpunkte ein, deren Anzahl beispielsweise proportional zu dem mit der geschäftlichen Transaktion verbundenen Umsatz ist. Der Kunde sammelt diese Prämienpunkte und kann, zuweilen erst nach Erreichen einer bestimmten Mindestanzahl, eine Prämie, z.B. in Form von Geld oder einer Naturalie Ware oder Dienstleistung erhalten. "Prämienpunkt" ist hier in einem weiten Sinn zu sehen, der beispielsweise auch direkt für einen Geldbetrag oder eine Naturalie stehen kann. Auch der Vorgang des "Sammelns" oder "Akkumulierens" von Prämienpunkten muß nicht zwingend aus einem Addieren von Prämienpunkten bestehen, die bei mehreren geschäftlichen Transaktionen erworben wurden. Vielmehr soll hierunter auch derjenige Sachverhalt fallen, bei dem bereits eine einzige geschäftliche Transaktion dazu führt, daß der Kunde eine Prämie erhalten kann.

Üblicherweise hat der Kunde eine Prämienkarte, die er bei der geschäftlichen Transaktion vorlegt, um neben seiner Identität seine Zugehörigkeit zu dem Prämiensystem belegen zu können. Die bei der geschäftlichen Transaktion erworbenen Prämienpunkte werden dann dem Punktekonto des Kunden gutgeschrieben. Vor dem Aufkommen von Computern forderte dies einen beträchtlichen buchhalterischen Aufwand, da die Gutschrift z.B. per Hand auf einer dem Kunden zugeordneten Karteikarte erfolgte.

Mit dem Aufkommen von vernetzten Computersystemen konnte dieser Aufwand reduziert werden. Und zwar können nun Kundendaten von der bei der geschäftlichen Transaktion vorgelegten Prämienkarte ins Computersystem eingelesen werden. Zusammen mit den ebenfalls im Computersystem erhältlichen Daten betreffend die geschäftliche Transaktion selbst (z.B. Umsatz und Art der Transaktion) kann die Anzahl erworbener Prämienpunkte automatisch ermittelt und dem Punktekonto gutgeschrieben werden.

Mit der zunehmenden Verbreitung des World Wide Web - also des Internets mit dem Hypertext Transfer Protokoll (HTTP) - gewinnen elektronische geschäftliche Transaktionen (E-Commerce) immer mehr an Bedeutung. Hierbei betritt der Kunde statt eines physischen Geschäftslokals mit seinem Browser ein virtuelles Geschäftslokal, und kauft, mietet oder reserviert über das Internet dort angebotene Waren oder Dienstleistungen. Prämiensysteme der oben beschriebenen Art finden inzwischen auch beim E-Commerce Anwendung.

Ein computergestütztes Prämiensystem für nichtelektronische geschäftliche Transaktionen ist beispielsweise aus der EP-A-0 308 224 bekannt, ein solches für E-Commerce beispielsweise aus der US-A-5 774 870. Letztlich beruhen aber die im Stand der Technik bekannten, computergestützten Prämiensysteme im wesentlichen auf einer Übertragung der bereits aus der Vor-Computerzeit bekannten Vorgehensweisen. Sie nutzen damit die besonderen Möglichkeiten der Computertechnik nicht in optimaler Weise aus. Der Erfindung liegt dementsprechend die Aufgabe zugrunde, Computersysteme, computerbasierte Verfahren und Computerprogramm-Produkte zum Prämiensystemmanagement anzugeben, welche von den Möglichkeiten der Computertechnik in vorteilhafterer Weise Gebrauch machen.

Diese Aufgabe wird gemäß einem ersten Aspekt der Erfindung gelöst durch ein Computersystem zum Management eines Prämiensystems, bei dem Kunden bei geschäftlichen Transaktionen Prämienpunkte erhalten, wobei das Computersystem einen Computer mit Speicher umfaßt, der dazu eingerichtet ist, auf Punktekonten die Prämienpunkte zu akkumulieren, welche der jeweilige Kunde durch geschäftliche Transaktionen erworben hat, wobei der Computer dadurch gekennzeichnet ist, daß mehrere Prämienkarten einem gemeinsamen Punktekonto zugeordnet werden können und die mit den mehreren Prämienkarten erworbenen Prämienpunkte dem gemeinsamen Punktekonto gutgeschrieben werden (Anspruch 1). Die nebengeordneten Ansprüche 8 und 10 sind auf ein entsprechendes computergestütztes Verfahren bzw. Computerprogramm-Produkt gerichtet.

Der Computer ist mit wenigstens einer zentralen Verarbeitungseinheit ausgerüstet und ist vorzugsweise so programmiert, daß er die mit den einzelnen Prämienkarten gesammelten Prämienpunkte zunächst einliest und/oder vorübergehend oder dauerhaft speichert. Da die Prämienkarten nicht oder zumindest nicht alle die Punktekonto-Kennzeichnung (z.B. Kontonummer) tragen, sondern voneinander verschiedene Prämienkarten-Kennzeichnungen (z.B. eine von der Kontonummer abweichende Kartennummer), ordnet der Computer die mit einer Prämienkarte erworbenen Punkte anhand der Prämienkartenkennzeichnung dem zugehörigen Punktekonto zu, wobei die Zuordnung "konzentrierend" ist, also mehrere Prämienkarten einem Punktekonto zuordnet. Anders ausgedrückt weist das Computersystem also vorzugsweise folgendes auf: Mittel zum kartenbezogenen Einlesen und/oder Speichern von Prämienpunkten, Mittel zum kontenbezogenen Speichern von Prämienkonten, Mittel zum Zuordnen und Konzentrieren der kartenbezogen gelesenen bzw. gespeicherten Prämienpunkte auf Prämienkonten und Mittel zum Hinzuzählen dieser Prämienpunkte zu den bereits auf dem jeweiligen Punktekonto gespeicherten Prämienpunkten. Zum Einlösen gesammelter Prämienpunkte wird von dem Punktekonto eine gewünschte Anzahl von Prämienpunkten abgezogen und veranlaßt, daß der Kunde eine Prämie entsprechenden Wertes (z.B. einen Geldbetrag in entsprechender Höhe erhält). Entsprechend weist das Computersystem vorzugsweise auch Mittel zum Verringern der auf einem Punktekonto gespeicherten Prämienpunktzahl und Mittel zum Vergeben einer der Punktzahlverminderung entsprechenden Prämie, z.B. Mittel zum Veranlassen einer Geldüberweisung entsprechender Höhe an den Kunden auf.

Klarstellendend sei angemerkt, daß es keineswegs erforderlich ist, daß sämtliche Kunden im Besitz mehrerer Prämienkarten sind. Ferner sei angemerkt, daß im Normalfall jeder Kunde genau ein Punktekonto hat, dies aber nicht zwingend ist: es ist vielmehr auch möglich, daß ein Kunde mehrere Punktekonten besitzt. Ebenfalls möglich ist, daß ein Kunde eine oder mehrere Prämienkonten, aber kein eigenes Punktekonto besitzt, wobei die mit seiner Punktekarte(n) gesammelten Punkte einem Punktekonto eines anderen Kunden hinzugefügt werden.

Das erfindungsgemäße Mehrkarten-Prämiensystem hat gegenüber herkömmlichen Einkarten-Prämiensystemen deutliche Vorteile:
1. Wenn ein Kunde seine Prämienkarte verloren hat und daher eine neue ausgestellt bekommt, braucht die alte Prämienkarte - anders als bei herkömmlichen Einkarten-Prämiensystemen - nicht oder zumindest nicht dauerhaft deaktiviert zu werden. Die alte Prämienkarte ist daher im Falle eines Wiederauffindens weiter benutzbar.
2. Anbieter mit einem bereits vorhandenen, z.B. anbieter- oder programmbeschränkten Prämiensystem können sich auf einfache Weise in das durch die Erfindung verwaltete Prämiensystem integrieren, ohne daß die Kunden ihre zu dem vormals anbieter- oder programmbeschränkten Prämiensystem gehörenden Prämienkarten aufgeben müßten. Das erfindungsgemäße System ist daher besonders für den schrittweisen Aufbau und Ausbau anbieter-, programm- und branchenübergreifender Prämiensysteme geeignet. Unter (Prämien-)Programmen werden übrigens Prämiensystem-Zusammenschlüsse einer meist kleinen Zahl von Anbietern verstanden, die z.B. nur geographische Teilmärkte bedienen und durch ihren Zusammenschluß eine weitgehende Marktabdeckung - und damit eine bessere Kundenbindung - in ihrem jeweiligen Teilmarkt erzielen (Beispiel: Vielflieger-Prämienprogramme von Zusammenschlüssen von Luftfahrtgesellschaften).
3. Ein Prämiensystem mit physischen Prämienkarten ist für E-Commerce-Anwendungen kaum geeignet, da die Ausrüstung aller Kundenrechner mit einem Kartenlesegerät technisch aufwendig ist und eine zu hohe Einstiegshürde für potentielle Kunden darstellt. Für E-Commerce-Prämiensysteme sollte daher das Vorlegen einer physischen Prämienkarte ersetzt werden durch Übermittlung von Identifizierungsinformation durch den Kunden im Verlauf der geschäftlichen Transaktion. Diese Identifizierungsinformation entspricht in logischer Hinsicht der mit einer physischen Prämienkarte übergebenen Information. Eine derartige Identifizierungsinformation kann daher als "virtuelle Prämienkarte" angesehen werden. Im Zusammenhang mit der vorliegenden Erfindung umfaßt der Begriff "Prämienkarte" oberbegriffartig sowohl physische Prämienkarten wie auch virtuelle Prämienkarten. Das erfindungsgemäße Mehrkarten-Prämiensystem erlaubt auf einfache Weise die Zusammenführung von E-Commerce-Prämiensystemen und "physischen" Prämiensystemen in einem einheitlichen Prämiensystem.

In den Unteransprüchen 2-7 sind weitere vorteilhafte Ausgestaltungen des erfindungsgemäßen Computersystems angegeben.

Zur Erzielung einer effizienten Datenspeicherung weist das Computersystem wenigstens drei- miteinander verknüpfte Speicherobjekte, bei denen es sich um Software- oder Hardwareobjekte handeln kann, auf:
- ein Kundenspeicherobjekt, welches kundenbezogene Daten speichert;
- ein Prämienkartenspeicherobjekt, welches prämienkartenbezogene Daten speichert; und
- ein Punktekontospeicherobjekt, welches punktekontobezogene Daten speichert (Anspruch 2).

Vorzugsweise findet ein relationales Datenbankmodell Anwendung, wobei die Speicherobjekte Tabellen einer oder mehrerer Datenbanken sind, also eine Kundentabelle, eine Prämienkartentabelle und eine Punktekontotabelle.

Wie bereits oben ausgeführt wurde, kann es sich bei den Prämienkarten, deren Punkte einem gemeinsamen Punktekonto gutgeschrieben werden, um physische Karten oder um virtuelle Karten handeln, besonders vorzugsweise aber um eine Kombination wenigstens einer physischen Karte mit wenigstens einer virtuellen Karte (Anspruch 3). Letzteres erlaubt auf besonders einfache Weise die Zusammenführung von E-Commerce-Prämiensystemen und physischen Prämiensystemen. Eine virtuelle Prämienkarte kann beispielsweise aus einem vom Kunden einzugebenden Kennwort und/oder dessen E-Mail-Adresse bestehen. Seine E-Mail-Adresse wird der Kunde im Rahmen einer E-Commerce-Transaktion meist ohnehin an den E-Commerce-Server senden, so daß die E-Mail-Adresse besonders gut als "virtuelle Karte" geeignet ist, da der Kunde für das "Vorlegen" dieser virtuellen Karte keine zusätzliche Aktion vorzunehmen braucht.

Wie oben bereits angesprochen wurde, handelt es sich vorteilhaft bei den mehreren Prämienkarten, die einem gemeinsamen Punktekonto zugeordnet sind, wenigstens teilweise um Prämienkarten verschiedener Anbieter (Anspruch 4). Normalerweise ist das Kundenkonto, zu dem die mehreren Prämienkarten gehören, dem Kunden selbst zugeordnet, da dieser üblicherweise selbst von dem Prämiensystem profitieren will. Es ist aber auch möglich, daß das Kundenkonto einer anderen Person zugeordnet ist (Anspruch 5). Der Begriff "Person" ist hier in einem weiteren Sinn zu verstehen, der natürliche Personen, Persondengesellschaften und juristische Personen (Gesellschaften, Körperschaften, Stiftungen, Vereine etc.) umfaßt. Insbesondere können die dem gemeinsamen Konto zugeordneten Prämienkarten jeweils verschiedene Karteninhaber haben, die gemeinsam auf ein Punktekonto sammeln. Beispielsweise können alle Mitglieder eines Vereins gemeinsam auf ihr Vereins-Punktekonto sammeln. Möglich sind auch Spendenaktionen im Rahmen des Prämiensystems, bei dem eine große Zahl von Karteninhabern gemeinsam ihre Prämienpunkte auf das Prämienkonto einer gemeinnützigen Organisation sammelt.

Wie ebenfalls oben bereits erwähnt wurde, sind vorteilhafterweise solche Prämienkarten, die zu einem anderen Prämiensystem gehören, in das der Erfindung zu Grunde liegende ("proprietäre") Prämiensystem integrierbar, indem den Prämienkarten des anderen Prämiensystems proprietäre Punktekonten zugeordnet werden und die Transaktionshistorie der vormals gesonderten Prämienkarten übernommen und vorzugsweise ebenfalls dem proprietären Punktekonto zugeordnet wird. In denjenigen Fällen, in denen der Kunde des anderen Prämiensystems bereits Kunde des proprietären Prämiensystems ist, muß nicht etwa eine weiteres proprietäres Punktekonto angelegt werden; vielmehr wird seine Prämienkarte des anderen Prämiensystems einfach als zusätzliche Karte seinem bereits bestehenden proprietären Punktekonto zugeordnet (Anspruch 6). Damit einher geht vorzugsweise die Zuordnung der Transaktionshistorie aus dem anderen Prämiensystem zu der Transaktionshistorieinformation des proprietären Punktekontos.

Es ist ferner vorteilhaft, wenn sämtlichen, zu einem Punktekonto gehörenden Prämienkarten die gleiche PIN (persönliche Identifikationsnummer) zugeordnet ist, sofern die betreffenden Prämienkarten überhaupt eine PIN zugeordnet haben (Anspruch 7).

Die Erfindung betrifft gemäß ihrem ersten Aspekt auch ein entsprechendes computergestütztes Verfahren (Anspruch 8) sowie ein entsprechendes Computerprogramm-Produkt (Anspruch 10). Bei dem Computerprogramm-Produkt kann es sich beispielsweise um einen Datenträger (etwa einen magnetischen oder optischen Datenträger) handeln, auf dem ein Computerprogramm zur Ausführung des erfindungsgemäßen Verfahrens gemäß Anspruch 8 gespeichert ist. Es kann sich aber auch um eine zur Übertragung über ein Datennetz bestimmte Datei handeln, welche ein solches Computerprogramm enthält. Hinsichtlich vorteilhafter Ausgestaltungen des erfindungsgemäßen Verfahrens und Computerprogramm-Produkts wird zur Vermeidung von Wiederholungen auf die obigen Ausführungen zum Computersystem verwiesen.

Für die Anbieterseite sind Prämiensysteme nicht nur wegen ihrer direkten Auswirkungen, also hauptsächlich Kaufanreiz und Kundenbindung interessant, sondern auch als Marketing-Hilfsmittel. Denn bei einem Prämiensystem werden - gewissermaßen nebenbei - detaillierte Informationen über das Transaktionsverhalten (z.B. Kaufverhalten) einer großen Menge von Konsumenten gewonnen. Diese können in verschiedener Hinsicht für Marketingzwecke genutzt werden. Beispielsweise können aus dem Transaktionsverhalten Profilattribute der einzelnen Kunden ermittelt werden (z.B. der Kunde gehört zur Gruppe der Kunden mit monatlichem Transaktionsumsatz höher als ein bestimmter Betrag, gegebenenfalls differenziert nach Transaktionsbranchen; der Kunde gehört zur Gruppe von Kunden mit bestimmten Interessen, Vorlieben oder Hobbies (er ist z.B. Musikliebhaber), etc.). Dies erlaubt es dann, Kunden mit bestimmten Profilen herauszufiltern. Möglich ist auch die Filterung von Kunden mit ganz spezieller Transaktionsvergangenheit aus den Transaktionseinzeldaten (z.B. die Filterung von Kunden, die im letzten Winter neue Skier, aber keine neuen Skischuhe gekauft haben). Die auf solche Weisen aus der Kundengesamtheit herausgefilterten Kunden können dann effektiv durch Direktwerbung angesprochen werden, etwa in herkömmlicher Form durch Ansprechen per Post, Telefon oder Telefax, oder im Internet durch Übersendung von E-mail oder Einblenden von auf den Kunden bezogenen Werbebannern, wenn dieser bestimmte Web-Seiten aufruft. Ferner können die Transaktionseinzeldaten der Marketingforschung dienen, etwa wenn herausgefunden werden soll, wie sich eine vorausgegangene Marketingmaßnahme im Detail auf das Transaktionsverhalten ausgewirkt hat (beispielhafte Fraugestellung: Im welchem Umfang hat eine vorausgegangene Marketingmaßnahme bewirkt, daß ein Produkt einer bestimmten Marke einem vergleichbaren Produkt einer anderen Marke vorgezogen wird?). Im Stand der Technik bekannte Prämiensysteme nutzen diese Möglichkeiten noch nicht in optimaler Weise aus.

Die Erfindung stellt daher gemäß ihrem zweiten Aspekt ein in dieser Hinsicht weiter entwickeltes Computersystem zum Management eines Prämiensystems bereit. Das Computersystem umfaßt zwei Untersysteme, nämlich ein operatives Untersystem und ein Datenauswertungs-Untersystem. Das operative Untersystem hält operative Daten, wie Punktekonten einzelner Kunden und/oder Prämienkarten, nicht jedoch detaillierte Transaktionseinzeldaten gespeichert. Hingegen hält das Datenauswertungs-Untersystem die detaillierten Transaktionseinzeldaten gespeichert, hält aber aussagekräftige Kennzeichnungsdaten des Kunden bzw. der Prämienkarte, der bzw. die zu der jeweiligen Einzeltransaktion gehört, nur in verschlüsselter Form gespeichert. (Anspruch 11). Vorteilhaft, aber nicht zwingend, ist eine Kombination des ersten und zweiten Aspekts der Erfindung.

Die Aufteilung des Computersystems gemäß dem zweiten Aspekt der Erfindung in wenigstens zwei Untersysteme hat folgende Vorteile:
- Obwohl sämtliche Informationen für Auswertungszwecke zugänglich bleiben, ist ein relativ schneller Zugriff auf häufig und/oder in Echtzeit benötigte Daten möglich. Es handelt sich bei ersteren um Daten, die der laufenden Punkteverwaltung dienen, bei zweiteren um solche, die z.B. einem Call-Center bei Kundenrückfragen zur Verfügung stehen müssen. Wegen der schnelleren Zugriffsmöglichkeit kann ein Rechner mit geringerer Leistungsfähigkeit gewählt werden, also der Aufwand verringert werden.
- Die Anonymisierung der Transaktionseinzeldaten ist aus Datenschutz- und Security-Aspekten vorteilhaft, da der Datenteil mit den anonymisierten Transaktionseinzeldaten aus dem proprietären Teil des erfindungsgemäßen Computersystems (also dem internen, für Extreme nicht zugänglichen Netz) an Dritte herausgegeben werden kann, etwa an externe Marktforschungsunternehmen. Auch wenn es trotz der üblicherweise vorhandenen Sicherheitsmaßnahmen einem Hacker gelingen sollte, in den proprietären Teil des Computersystems einzudringen und sich Zugang zu den Transaktionseinzeldaten zu verschaffen, so bleibt ihm die Information, wer sich hinter den Transaktionseinzeldaten verbirgt, doch verborgen, wenn es ihm nicht auch gelingt, sich Zugang zu den Entschlüsselungsdaten zu verschaffen.

Grundsätzlich können die operativen Daten und die Transaktionseinzeldaten in verschiedenen Speicherobjekten (z.B. Tabellen) ein und derselben Datenbank gespeichert sein, da eine Zuordnung wegen der Verschlüsselung nicht ohne weiteres möglich ist. Jedoch ist die Verwendung gesonderter Datenbanken vorteilhaft. Und zwar weist gemäß Anspruch 12 das operative Untersystem eine Datenbank zur Speicherung der operativen Daten auf, und das Datenauswertungs-Untersystem eine andere Datenbank zur Speicherung der Transaktionseinzeldaten.

Auch bei Verwendung zweier gesonderter Datenbanken ist es möglich, daß die beiden Untersysteme nur im logischen Sinn voneinander getrennt sind, also beispielsweise zwei Applikationen sind, die ggf. gleichzeitig ausgeführt werden. Vorteilhafter ist jedoch eine physische Trennung der beiden Untersysteme, wobei zumindest die beiden Datenbanken, vorzugsweise jedoch auch die zum jeweiligen Untersystem gehörenden Applikationen auf verschiedenen Computern beheimatet sind (Anspruch 13). Diese verschiedenen Computer sind vorteilhaft miteinander vernetzt oder vernetzbar.

Um das unberechtigte Entschlüsseln der Transaktionseinzeldaten zu erschweren, wird die Information zur Entschlüsselung der verschlüsselten Kunden- bzw. Kartendaten vorzugsweise gesondert von dem Datenauswertungs-Untersystem gespeichert. Eine "gesonderte" Speicherung kann z.B. eine Speicherung in einer anderen Datenbank sein, insbesondere auf einer anderen Datenbank auf einem anderen Computer. Die Entschlüsselungsinformation kann dabei im operativen Untersystem gespeichert sein, oder in einem weiteren, von beiden genannten Untersystemen getrennten System.

Im einfachsten Fall beruht die Verschlüsselung gemäß Anspruch 15 darauf, daß die Kunden bzw. Prämienkarten durch nicht aussagekräftige Verweisdaten (z.B. nicht aussagekräftige Kundennummern bzw. Prämienkartennummern) gekennzeichnet sind, und die Entschlüsselungsdaten durch eine Tabelle mit einer Zuordnung der nicht aussagekräftigen Verweisdaten auf aussagekräftige Bezeichnungen des Kunden bzw. der Prämienkarte (z.B. der Name des Kunden oder die auf der Prämienkarte angegebene Kartennummer) gegeben sind. Die Zuordnung kann mehrschichtig sein, beispielsweise können im operativen Untersystem und im Datenauswertungs-Untersystem unterschiedliche Sätze von Kundennummern geführt werden. Zur Entschlüsselung wird dann erst die Kundennummer des Datenauswertungs-Untersystems mit Hilfe einer Zuordnungstabelle in die Kundennummer des operativen Untersystems übersetzt, und in einem zweiten Schritt wird die Kundennummer des operativen Untersystems durch den Namen des Kunden ersetzt werden.

Alternativ oder ergänzend kann die Verschlüsselung gemäß Anspruch 16 aber auch auf Enkryptionsalgorithmen beruhen, wobei die Entschlüsselungsinformation (symmetrische oder asymmetrische) Dekryptionsschlüssel umfaßt. Bei der Verschlüsselung wird der sogenannte "Plaintext" in sogenannten "Ciphertext" mit Hilfe eines Enkryptionsschlüssels transformiert. Ein weit verbreiteter symmetrischer Enkryptionsstandard ist der ISO-Standard DES (Data Encryption Standard), ein weit verbreiteter asymmetrischer Enkryptionsstandard ist RSA (benannt nach seinen Erfindern Rivest, Shamir und Adelman).

Klarstellend sei angemerkt, daß es neben den genannten operativen Daten und detaillierten Transaktionseinzeldaten Daten übergreifender Art geben kann, die beim operativen Untersystem und/oder beim Datenauswertungs-Untersystem angesiedelt sein können. Hierbei handelt es sich beispielsweise um bereits oben erwähnte Profildaten, einschließlich profildatenähnlicher Stammdaten, wie Alter, Geschlecht des Kunden.

Vorzugsweise weist das Computersystem eine Netzwerkverbindung zu einer Einrichtung zur Echtzeit-Kundenreaktion, beispielsweise einem Call-Center oder einem Webserver auf. Dabei kann aus dieser Einrichtung vorzugsweise nicht auf die Daten des Datenauswertungs-Untersystems zugegriffen werden (Anspruch 17).

Gemäß Anspruch 18 werden im Datenauswertungs-Untersystem gespeicherte Daten ausgewertet und die Auswertungsergebnisse wenigstens teilweise mit entschlüsselten Kunden- bzw. Prämienkartendaten im operativen Untersystem gespeichert. Es kann sich hierbei beispielsweise um die Erstellung von Profildaten handeln, die zunächst aus den Transaktionseinzeldaten gewonnen werden, dem operativen System übermittelt werden und dort entschlüsselt und gespeichert werden, so daß sie beispielsweise einem Call-Center zur Verfügung stehen oder für eine selektive Banner-Werbung beim Aufruf von Web-Seiten des Prämiensystembetreibers oder von Anbietern verwendet werden.

Gemäß Anspruch 19 werden im Datenauswertungs-Untersystem gespeicherte Daten ausgewertet, und die Auswertungsergebnisse werden über eine Netzwerkverbindung einem externen Empfänger zur Verfügung gestellt. Hierbei kann es sich beispielsweise um einen Datentreuhänder handeln, dem außerdem die Entschlüsselungsinformation übermittelt wird, der dann die Entschlüsselung vornimmt und die so gewonnenen Kundendaten beispielsweise einer Mailing-Aktion zugrunde legt.

Anspruch 20 ist auf ein entsprechendes Verfahren gemäß dem zweiten Aspekt der Erfindung gerichtet. Hinsichtlich vorteilhafter Ausgestaltungen des Verfahrens wird wiederum auf die obigen Ausführungen zum Computersystem verwiesen.

Beide Aspekte der Erfindung werden nun anhand von Ausführungsbeispielen und der angefügten Zeichnung näher erläutert.

In der Zeichnung zeigen:
- Fig. 1: einen Ausschnitt aus einem beispielhaften Transaktionsjournal;
- Fig. 2: einen Ausschnitt aus beispielhaften Transaktionseinzeldaten;
- Fig. 3: eine schematische Darstellung eines Drei-Tabellen-Systems;
- Fig. 4: Ausschnitte aus Beispielen für die drei Tabellen in Fig. 3;
- Fig. 5: ein Ausschnitt aus einer beispielhaften Konteninformation für ein bestimmtes Punktekonto;
- Fig. 6: ein schematisches Ablaufdiagramm eines Verfahrens zum Sammeln von Punkten;
- Fig. 7: ein schematisches Ablaufdiagramm eines Verfahrens zum Einlösen von Punkten;
- Fig. 8: eine schematische Übersichtsdarstellung eines Computersystems zum Prämiensystemmanagement, zusammen mit verschiedenen Netzverbindungen und externen Rechnern; und
- Fig. 9: ein schematisches Ablaufdiagramm eines Verfahrens zur Auswertung von Transaktionseinzeldaten.

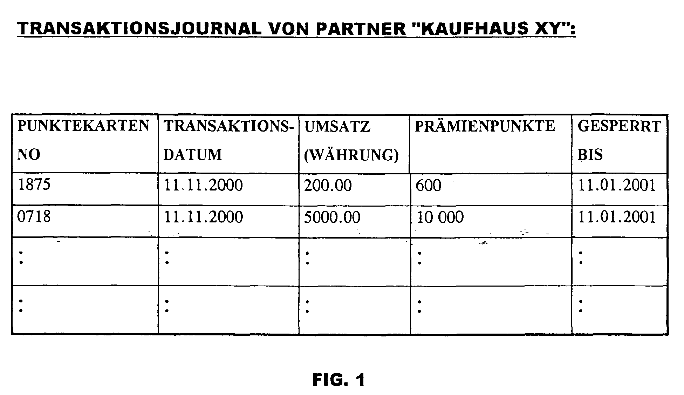

Die bei dem Prämiensystem teilnehmenden Anbieter und Kunden werden im folgenden "Partner" bzw. "Mitglieder" genannt. Ein Mitglied weist bei einer geschäftlichen Transaktion bei einem Partner seine Prämienkarte vor, von der zumindest die Kartennummer z.B. auf optischem oder magnetischem Wege eingelesen wird. Vorteilhaft tragen die Prämienkarten - oder bei mehreren Prämienkarten pro Punktekonto - zumindest einige dieser mehreren Prämienkarten - keine Information über das zugehörige Punktekonto, wie etwa die Kontonummer. Die Zuordnung der Punkte zum Konto erfolgt vielmehr erst durch das Computersystem zum Prämiensystemmanagement. Bei einer E-Commerce-Transaktion kann anstelle des Vorweisens der Prämienkarte die Übermittlung der E-Mail-Adresse des Mitglieds an den E-Commerce-Partner treten. Die transaktionsbezogene Information muß nun dem Prämienmanagementsystem übermittelt werden. Dies kann grundsätzlich unmittelbar nach jeder geschäftlichen Transaktion geschehen; vorteilhaft sammelt jedoch der Partner die Daten mehrerer geschäftlicher Transaktionen und sendet diese dann gesammelt, z.B. tageweise an das Prämienmanagementsystem. Hierzu bereitet das Computersystem des Partners die Transaktionsinformationen auf, und zwar erstellt es ein Transaktionsjournal, entsprechend dem in Fig. 1 gezeigten Beispiel. Es handelt sich hierbei um eine Tabelle mit jeweils einem Datensatz pro Transaktion. Die Tabelle umfaßt mehrere Felder, die unter anderem folgende Transaktionsattribute repräsentieren: Nummer der bei der Transaktion vorgelegten Prämienkarte, Transaktionsdatum, Transaktionsumsatz, für die Transaktion gutzuschreibende Prämienpunkte sowie ggf. ein Datum, bis zu dem die Transaktionspunkte gesperrt sind. Eine derartige zeitlich befristete Sperre wird beispielsweise dann errichtet, wenn das Mitglied ein zeitlich befristetes Rückgaberecht hat und mit der Prämiengutschrift das Ende der Rückgabefrist abgewartet werden soll, so daß im Fall einer Rückgabe die Prämienpunkte entfernt werden können, ohne daß es bereits zu einer Gutschrift gekommen ist.

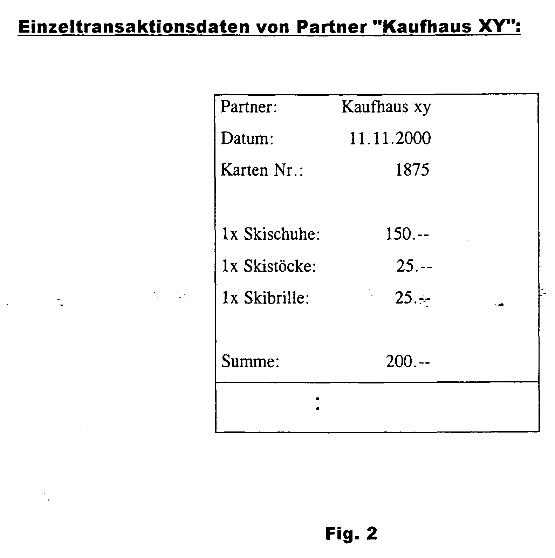

Darüber hinaus übergibt der Partner auch Transaktionseinzeldaten an das Prämienmanagementsystem, was beispielhaft in Fig. 2 dargestellt ist. Solche Transaktionseinzeldaten können beispielsweise dem entsprechen, was üblicherweise auf einem Kassenzettel aufgedruckt ist, also z.B. Angabe des Partners, des Transaktionsdatums und einer Liste, welche die bei der Transaktion gehandelten Gegenstände/Dienstleistungen spezifiziert sowie deren Stückzahl, Preis etc. angibt, sowie Angabe der bei der Transaktion vorgelegten Prämienkartennummer.

Die tägliche Übertragung des Transaktionsjournals und der Transaktionseinzeldaten vom Partner an das Computersystem des Prämienmanagementsystem erfolgt über ein Computernetz, vorzugsweise über das Internet, z.B. unter Anwendung des File Transfer Protocol (FTP).

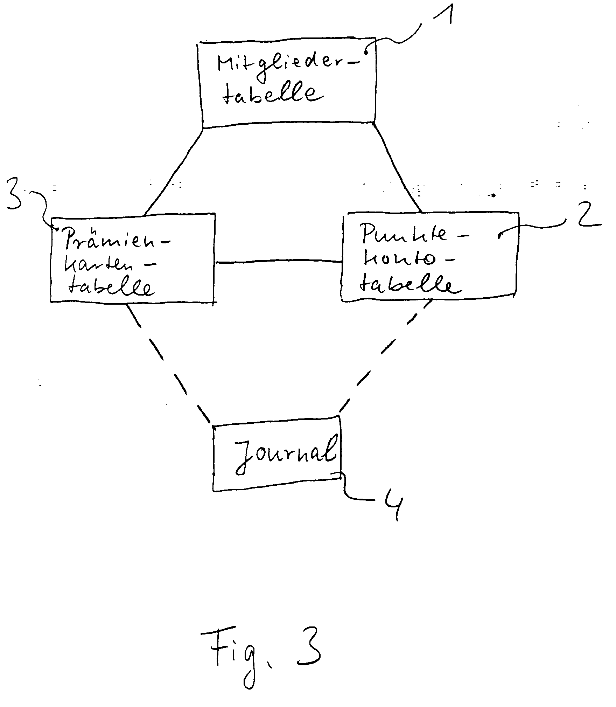

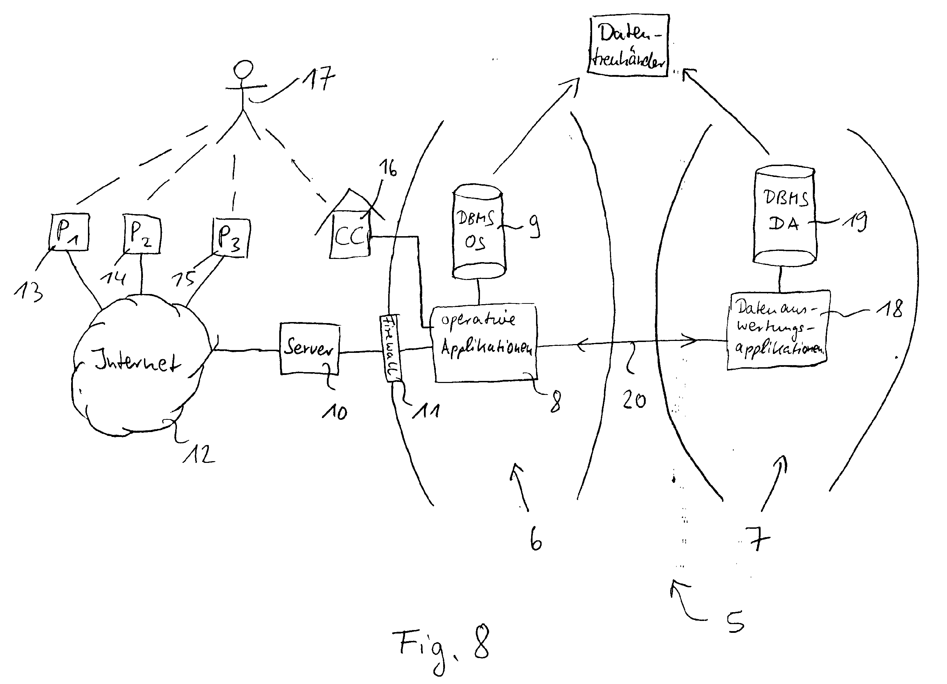

Fig. 3 veranschaulicht die datenbankmäßige Grundstruktur eines Untersystems des Datenbankmanagementsystems, und zwar des sogenannten operativen Systems (siehe hierzu Fig. 8). Diese Grundstruktur ist eine Drei-Tabellen-Struktur, wobei aber selbstverständlich noch weitere Tabellen vorgesehen sein können. Bei der ersten der drei Tabellen handelt es sich um eine Mitgliedstabelle 1, in der im wesentlichen Mitglieds-Stammdaten gespeichert sind. Bei der zweiten Tabelle handelt es sich um eine Punktekontotabelle 2, in welcher im wesentlichen punktekonto-bezogene Daten gespeichert sind. Bei der dritten Tabelle handelt es sich um eine Prämienkartentabelle 3, in der im wesentlichen prämien-karten-bezogene Informationen gespeichert sind. Bei (nicht gezeigten) Ausführungsformen können die Kundentabelle 1 und die Punktekontotabelle 2 zu einer Tabelle zusammengefaßt sein, so daß sich eine Zwei-Tabellen-Struktur ergibt. Die in Fig. 3 gezeigte Drei-Tabellen-Struktur ist jedoch bevorzugt, da mit ihr auf einfachere Weise diejenigen Fälle berücksichtigt werden können, in denen ein Mitglied kein eigenes Punktekonto besitzt (weil es die von ihm gesammelten Prä-mienpunkte einem Fremdkonto gutschreiben läßt, z.B. dem Punktekonto seiner Firma oder einer Wohltätigkeitsorganisation) oder mehrere Punktekonten besitzt. In Fig. 3 ist auch das Journal 4 gemäß Fig. 1 zusammen mit Verknüpfungen zur Prämienkartentabelle 3 und zur Punktekontotabelle 2 gezeigt. Dies soll veranschaulichen, daß das Prämienmanagementsystem nach Empfang eines Journals die dort enthaltenen Prämienpunkte jeweils dem zugehörigen Datensatz in der Prämienkartentabelle 3 und in der Punktekontotabelle 2 gutschreibt.

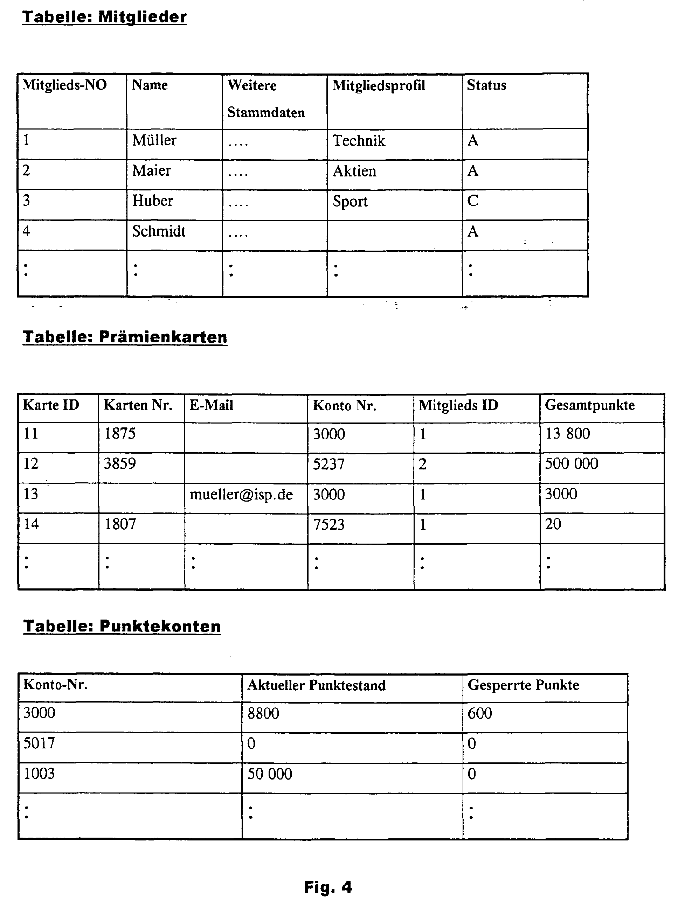

In Fig. 4 sind Beispiele für die drei in Fig. 3 gezeigten Tabellen angegeben. Die Felder der Mitgliedstabelle 1 repräsentieren folgende mitgliedsbezogene Attribute: Mitgliedsnummer, Name oder Firma, Titel, Anrede, Adresse, Telefonnummer geschäftlich, Telefonnummer privat, Mobilrufnummer, Faxnummer, E-Mail-Adresse, Geburtsdatum, Geschlecht, Sprache, Familienstand, Eintrittsdatum, Nummer des Bankkontos, auf das Prämienpunkte beim Einlösen in Form eines Barrabatts überwiesen werden, zugehörige Bankleitzahl, zugehöriger Bankname, persönliche Identifizierungsnummer des Mitglieds (PIN). Andere Attribute betreffen den Mitgliedsstatus und treffen eine Aussage darüber, ob das Mitglied einer Weitergabe von Personendaten an Partner und/oder den Erhalt von Werbung seitens der Partner zugestimmt hat. Weitere Attribute betreffen das Mitgliedsprofil, geben also z.B. Auskunft darüber, welche besonderen Interessen das Mitglied hat.

Die Prämienkartentabelle 3 hat Felder, deren Attribute folgendes repräsentieren: Kartenkennzeichner (Karten-ID, das ist eine intern verwendete, logische Kartennummner), Kartennummer (das ist die Nummer oder sonstige Kennzeichnung, die auf der Prämienkarte erscheint), E-Mail-Adresse, Kontonummer, Mitgliedsnummer, mit der jeweiligen Prämienkarte bis zur Gegenwart akkumulierte Gesamt-Prämienpunktzahl.

Die Felder der Punktekontotabelle 2 repräsentieren folgende Attribute: Kontonummer, aktueller Prämienpunktestand (bezogen auf das jeweilige Punktekonto, hier fließen als die gesammelten Prämienpunkte von allen zugehörigen Prämienkarten ein), aktueller Stand gesperrter Prämienpunkte.

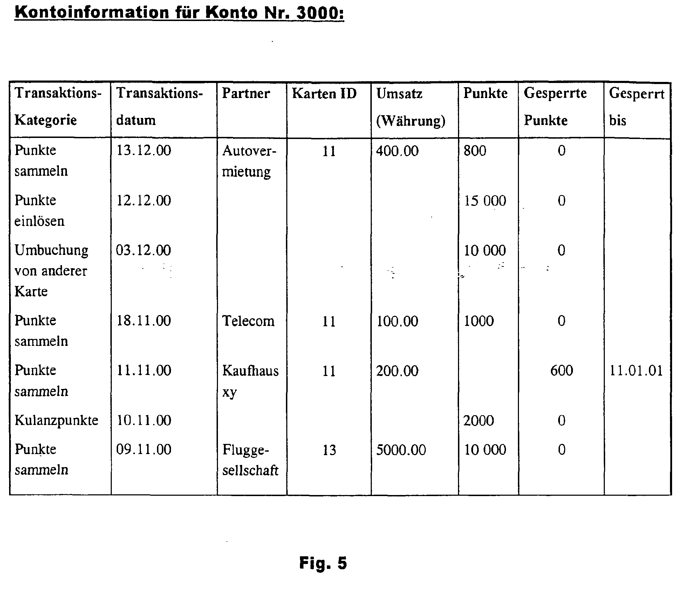

Darüber hinaus sind im operativen System des Prämienmanagementsystems Historiedaten gespeichert. Diese betreffen z.B. Änderungen der Daten der Mitgliedstabelle 1. Insbesondere handelt es sich daneben um die Punktekontohistorie. In Fig. 5 ist beispielhaft eine Kontoinformationstabelle gezeigt, die vom Prämienmanagementsystem für jedes einzelne Punktekonto geführt wird. Jeder Datensatz dieser Tabelle entspricht einer Transaktion, wobei hier unter Transaktion neben der geschäftlichen Transaktion zwischen Partner und Mitglied auch alle prämiensystem-internen Transaktionen verstanden werden, die mit einem Buchungsvorgang auf dem Punktekonto verbunden sind. Die Felder dieser Tabelle repräsentieren folgende, transaktionsbezogene Attribute: Transaktionskategorie (also z.B.

Punkte sammeln, Punkte einlösen, Umbuchung von anderer Karte, Erhalt von Kulanzpunkten, Entfernen von gesperrten Punkten, Umbuchen von gesperrten Punkten auf Punktekonto), Transaktionsdatum, Name oder Kennzeichner des bei der Transaktion beteiligten Partners (nur bei geschäftlicher Transaktion), Karten-ID, Transaktionsumsatz, Zahl der bei der Transaktion erworbenen oder abgegebenen Punkte, Zahl der bei der Transaktion erworbenen oder abgegebenen gesperrten Punkte, Ende der Sperrfrist.

Bei anderen, nicht gezeigten Ausführungsformen können die Tabellen der Fig. 1, 2, 4 und 5 abweichend strukturiert sein. Insbesondere können die genannten Tabellen zusätzliche Felder oder nur eine Untermenge der genannten Felder aufweisen.

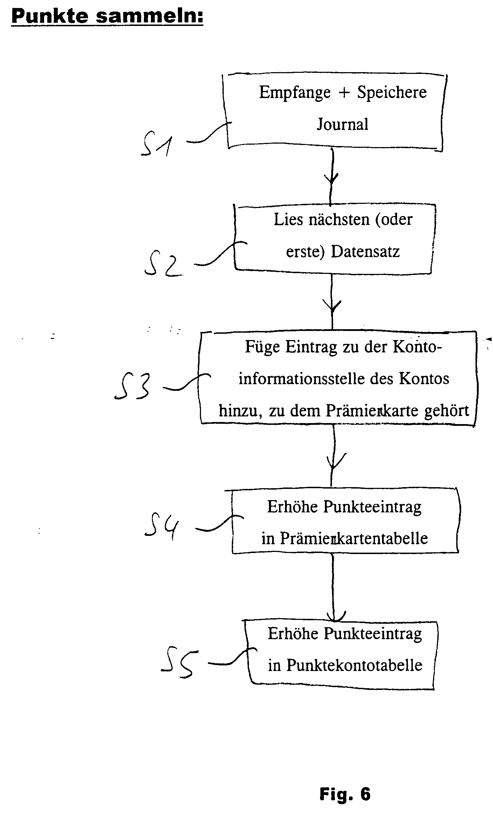

Fig. 6 veranschaulicht in schematischer Vereinfachung den Prozeß des "Punkte Sammelns" beim Computersystem des Prämienmanagementsystems. Diesem Prozeß vorgelagert - und daher nicht dargestellt - ist die beim Partner ablaufende geschäftliche Transaktion, welche im Ergebnis zur Erstellung eines Transaktionsjournals gemäß Fig. 1 und von Transaktionseinzeldaten gemäß Fig. 2 und zur Übersendung dieser Information an das Prämienmanagementsystem führt. Ebenfalls nicht dargestellt ist in Fig. 6 die in einem Datenauswertungs-Untersystem folgende Behandlung der Transaktionseinzeldaten. Im Schritt S1 empfängt und speichert das Prämienmanagementsystem das Transaktionsjournal gemäß Fig. 1. Im Schritt S2 wird der erste oder - bei späteren Durchläufen - der nächste Datensatz des Transaktionsjournal zur Verarbeitung eingelesen. Im Schritt S3 werden die Transaktionsdaten des Datensatzes als neuer Datensatz der Konteninformationstabelle desjenigen Punktekontos hinzugefügt, zu dem die Prämienkarte des jeweils gelesenen Journaldatensatzes gehört. Im Schritt S4 wird der in der Prämienkartentabelle bei dieser Prämienkarte gespeicherte Prämienpunktestand um die bei der Transaktion erworbenen Prämienpunkte erhöht. Entsprechend wird im Schritt S5 in der Prämienkontotabelle der bei dem Punktekonto, zu dem die Prämienkarte gehört, gespeicherte Prämienpunktestand erhöht. Die Schritte S2 bis S5 werden für alle Datensätze des Empfangsjournals nacheinander durchgeführt.

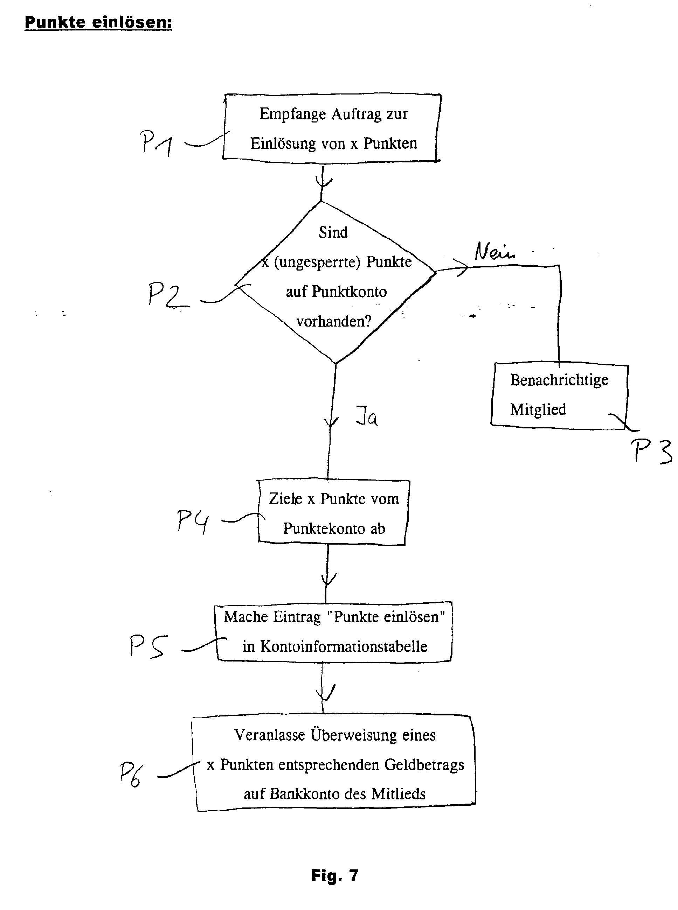

In entsprechend schematischer Weise veranschaulicht Fig. 7 den Prozeß des "Punkte Einlösens". In Schritt P1 wird beim Computersystem des Prämienmanagementsystems ein Auftrag für die Einlösung einer bestimmten Anzahl von Punkten ("x Punkte") erhalten. Dieser Auftrag kann seitens des Mitglieds z.B. auf telefonischem Wege, per Telefax, "Schneckenpost" oder E-Mail erteilt werden. Im Schritt P2 prüft das Computersystem, ob sich auf dem Punktekonto des betreffenden Mitglieds zumindest eine dem Einlösungsauftrag entsprechende Anzahl von Prämienpunkten befindet. Sollte dies nicht der Fall sein, wird im Schritt P3 eine Benachrichtigung des Mitglieds von diesem Umstand veranlaßt, es kommt dann zu keiner Punkteeinlösung. Bei anderen (nicht gezeigten) Ausführungsformen wird in diesem Fall hingegen die Gesamtzahl vorhandener Prämienpunkte eingelöst. Sofern eine ausreichende Anzahl von Prämienpunkten vorhanden ist, wird im Schritt P4 die einzulösende Punktanzahl von dem Prämienpunktkonto abgezogen. Im Schritt P5 erfolgt ein entsprechender Eintrag in der zu dem Prämienkonto gehörenden Kontoinformationstabelle. Im Schritt P6 wird durch elektronischen Bankverkehr die Überweisung eines den eingelösten Punkten entsprechenden Geldbetrags auf das Bankkonto des Mitglieds veranlaßt, gemäß den in der Kundentabelle 1 gespeicherten Bankkontodaten.

Gemäß Fig. 8 weist das allgemein mit 5 bezeichnete Computersystem zum Prämiensystemmanagement zwei Untersysteme auf, nämlich ein operatives Untersystem 6 und ein Datenauswertungs-Untersystem 7. Das operative Untersystem 6 umfaßt im wesentlichen folgende Software-Objekte: Verschiedene Applikationen, die im wesentlichen für die Prämienpunkteverwaltung, Interaktion mit anderen Objekten und Applikationen des Computersystems und für die Systemverwaltung verantwortlich sind und insgesamt als operative Applikationen 8 bezeichnet werden, und ein operatives Datenbank-Managementsystem (DBMS) 9, welches für die Speicherung der operativen Daten, d.h. Daten gemäß Fig. 1, 3, 4 und 5 zuständig ist. Das operative Untersystem 6 ist über eine Firewall 11 und einen Kommunikations-Server 10 mit dem Internet 12 verbunden, und darüber mit einer Vielzahl von Partner-Computersystemen 13, 14, 15 gekoppelt. Ferner sind die operativen Applikationen 8 mit einem Call-Center 16 gekoppelt. Ein Mitglied 17 tritt mit dem Computersystem 5 einerseits indirekt in Verbindung, und zwar indem er mit den Partnern 13, 14, 15 geschäftliche Transaktionen durchführt, und andererseits direkt, indem er beim Call-Center 16 anruft oder die Web-Site des Computersystem-Betriebs "besucht" und von dort Informationen einholt oder Aufträge erteilt, so beispielsweise einen Auftrag zur Einlösung von Prämienpunkten.

Das zweite Untersystem, nämlich das Datenauswertungs-Untersystem 7 umfaßt eine oder mehrere Datenauswertungsapplikationen 18 und ein Datenauswertungs-DBMS 19. Die beiden Untersysteme 6, 7 sind über eine Kommunikationsverbindung 20 miteinander gekoppelt. Bevorzugt laufen die Datenauswertungsapplikationen 18 samt Datenauswertungs-DBMS 19 auf einem physisch anderen Rechner als die operativen Applikationen 8 samt operativem DBMS 9. Bevorzugt sind auch die vom Datenauswertungs-DBMS 19 verwalteten Daten auf einem physisch anderen Datenspeichersystem (z.B. einer anderen Festplatteneinheit) gespeichert, als die vom operativen DBMS 9 verwalteten Daten. In diesem Fall handelt es sich bei der Kommunikationsverbindung 20 um eine Verbindung zwischen gesonderten Rechnern, z.B. in Form eines dem Computersystem 5 proprietären, durch die Firewall 11 geschützten Netzwerks, auf das Externe keinen Zugriff haben. Bei anderen Ausführungsformen ist es aber auch möglich, daß die Datenauswertungsapplikationen 18 und die operativen Applikationen 8 und oder die DBMS'e 9 und 19 auf einem gemeinsamen Rechner laufen, also nur logisch voneinander getrennt sind. Entsprechend können die DBMS'e 9 und 19 auf ein gemeinsames physisches Datenspeichersystem zugreifen. Im Fall einer nur logischen Trennung der beiden Systeme stellt die Telekommunikationsverbindung 20 eine Schnittstelle zwischen den beiden Applikationen 8 und 18 dar.

Die von den Partnern 13, 14, 15 über das Internet 12 gesendeten Transaktionsjournale 4 und Transaktionseinzeldaten werden zunächst beim Computersystem 5 in einer (nicht dargestellten) Zwischenspeicherungsapplikation zwischengespeichert. Die Transaktionsjournale 4 werden dann den operativen Applikationen 8 zur Weiterverarbeitung gemäß den in Fig. 6 und 7 gezeigten Verfahren übergeben. Die Transaktionseinzeldaten werden hingegen von den operativen Applikationen 8 anonymisiert, indem jeweils die angegebene Kartennummer durch eine verschlüsselte Fassung ersetzt wird. Gegebenenfalls wird hierbei eine verschlüsselte Mitgliedsidentifizierung hinzugefügt, um bei späteren Auswertung die Transaktionseinzeldaten in Beziehung zu Mitgliedsattributen (z.B. Alter des Mitglieds) setzen zu können. Anschließend werden die Transaktionseinzeldaten über die Kommunikationsverbindung 20 an das Datenauswertungssystem 7 übertragen und nur dort gespeichert.

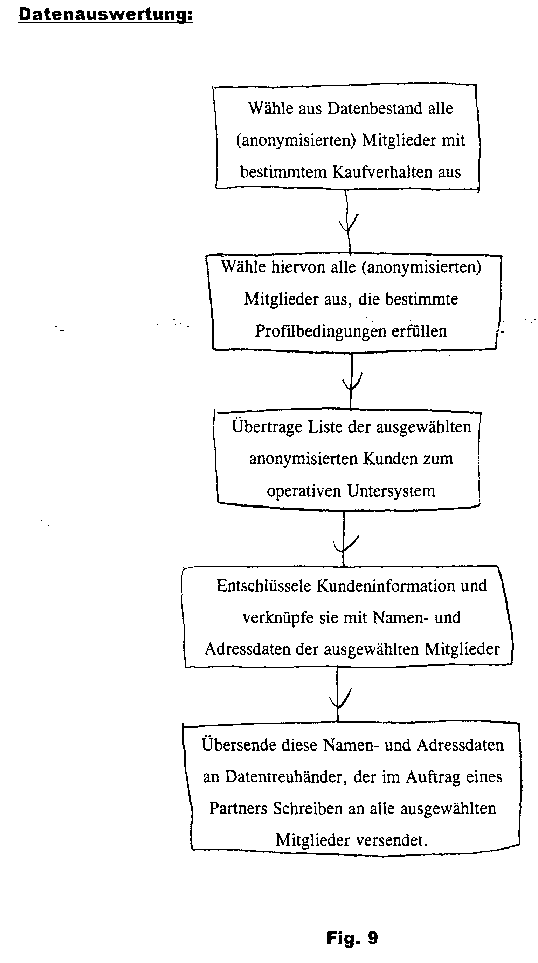

Ein von dem Datenauswertungs-Untersystem 18 ausgeführter Auswertungsprozeß ist - stark schematisch vereinfacht - in Fig. 9 dargestellt. Im Schritt R1 werden aus dem Transaktionseinzeldatenbestand alle (anonymisierten) Mitglieder ausgewählt, die in einem definierten vergangenen Zeitraum ein bestimmtes Transaktionsverhalten gezeigt haben (beispielsweise alle Mitglieder, welche in dem Bezugszeitraum auf einem bestimmten Warengebiet Käufe in einem Umfang getätigt haben, der oberhalb eines bestimmten Betrags liegt). In Schritt R2 werden hiervon wiederum alle diejenigen Mitglieder ausgewählt, die zusätzlich bestimmte Profilbedingungen (z.B. Alter in einem bestimmten Bereich, bestimmtes Geschlecht) erfüllen. Im Schritt R3 werden die so ausgewählten Daten über die Kommunikationsverbindung 20 an das operative Untersystem 6 übertragen.

Im Schritt R4 folgt dort die Entschlüsselung der verschlüsselten Mitgliedsidentifizierung, z.B. durch Anwendung eines Entschlüsselungsalgorithmus bzw. Ermitteln aussagekräftiger Mitgliedsnummern aus nichtaussagekräftigen Referenz-Mitgliedsnummern. Im Schritt R5 werden Namen und Adressdaten der so ausgewählten und entanonymisierten Mitglieder an einen Datentreuhänder 21 (Fig. 8) versendet. Dieser verwendet die erhaltenen Namen- und Adressdaten z.B. zur Durchführung einer Direct-Mailing-Aktion. Er erhält hierzu seitens seines Auftraggebers, z.B. eines der Partner 13, 14, 15 eine Serienbriefvorlage, in welche er die vom Computersystem 5 übersandten Namen- und Adressdaten einsetzt und die so hergestellten Briefe versendet. Der Datentreuhänder stellt dabei sicher, daß sein Auftraggeber nicht namentlich in Erfahrung bringen kann, an welche Mitglieder Briefe versendet wurden.

Bei einer in Fig. 8 angedeuteten anderen Ausführungsform findet die Entanonymisierung der vom Datenauswertungs-Untersystem 7 ausgewählten Mitgliedsdaten nicht bereits im Bereich des Computersystems 5 statt, sondern erst beim Datentreuhänder 21. Hierzu werden die ausgewählten Mitgliedsdaten in verschlüsselter Form auf direktem Wege von dem Datenauswertungs-Untersystem 7 an den Datentreuhänder 21 versendet. Unabhängig von dieser Versendung erhält der Datentreuhänder 21 vom operativen Untersystem 6 die zur Entanonymisierung notwendigen Entschlüsselungsdaten und ggf. -algorithmen sowie die zum Herstellen der Serienbriefe erforderlichen Namen- und Adressdaten.

Bei einer Abwandlung des in Fig. 9 veranschaulichten Auswertungsbeispiels werden für alle oder einen Teil der Mitglieder aus der Transaktionseinzeldaten Profilattribute ermittelt, aus denen z.B. hervorgeht, welche Interessen, Hobbies, Vorlieben das einzelne Mitglied hat, welches Konsumverhalten es bevorzugt (z.B. E-Commerce), wie viel Geld es im Monat für geschäftliche Transaktionen zur Verfügung hat etc. Diese Profilattribute können im operativen Untersystem 6 gespeichert werden, und zwar etwa in der Mitgliedstabelle 1. Diese Profilinformation steht dann dem Call-Center 16 zur Verfügung oder kann dem selektiven einblenden von Banner-Werbung in die Home-Page des Computersystembetreibers dienen, wenn diese vom Mitglied aufgerufen wird. Die so gewonnene Mitgliederprofilinformation kann auch im Datenauswertungs-Untersystem gespeichert bleiben, um z.B. nachfolgende Filtervorgänge zu erleichtern.

Daneben lassen sich durch Auswertung der Transaktionseinzeldaten eine Reihe von weiteren Fragestellungen beantworten. Beispielsweise ist es möglich, durch Auswertung von Transaktionseinzeldaten Marktforschung zu betreiben, indem etwa die Reaktion der Mitglieder auf bestimmte vorausgegangene Marketingmaßnahmen empirisch erfaßt und meßbar gemacht wird.

Abgesehen davon, daß in Direct-Mailing-Aktionen, Profilauswertungen und dergleichen ohnehin nur Mitglieder einbezogen werden, die dem vorher zuvor zugestimmt haben, leistet das erfindungsgemäße Computersystem zum Prämiensystemmanagement durch die Abtrennung und Anonymisierung der Transaktionseinzeldaten in datenschutzrechtlicher Hinsicht einen bedeutenden Fortschritt gegenüber Lösungen des Standes der Technik.

Indem sich die Erfindung deutlich von den "Papier"-Vorbildernsystemen löst und wesentlich von den Möglichkeiten der Computertechnik Gebrauch macht, stellt sie ein Prämienmanagementsystem bereit, welches in besonders vorteilhafter Weise für anbieter-, programm- und branchenübergreifende Prämiensysteme geeignet ist.

## Patentansprüche

1. Computersystem (5) zum Management eines Prämiensystems, bei dem Kunden bei geschäftlichen Transaktionen Prämienpunkte erhalten, umfassend:
einen Computer (8) mit Speicher (9), der auf Punktekonten die Prämienpunkte akkumuliert, welche der jeweilige Kunde durch geschäftliche Transaktionen erworben hat, und der die akkumulierten Punkte speichert,
**dadurch gekennzeichnet, daß**
der Computer (8) und dessen Speicher (9) so eingerichtet sind, daß mehrere Prämienkarten einem gemeinsamen Punktekonto zugeordnet werden können, und
die mit den mehreren Prämienkarten erhaltenen Prämienpunkte dem gemeinsamen Punktekonto gutgeschrieben werden.

2. Computersystem (5) nach Anspruch 1, welches wenigstens folgende drei Speicherobjekte (1, 2, 3) aufweist:
- ein Kundenspeicherobjekt (1), welches kundenbezogene Daten speichert;
- eine Prämienkartenspeicherobjekt (3), welches prämienkartenbezogene Daten speichert; und
- ein Punktekontospeicherobjekt (2), welches punktekontobezogene Daten speichert.

3. Computersystem (5) nach Anspruch 1 oder 2, bei welchem die mehreren Prämienkarten, deren Punkte einem gemeinsamen Punktekonto gutgeschrieben werden, physische Prämienkarten sind, die vom Kunden bei der geschäftlichen Transaktion vorzulegen sind, und/oder virtuelle Prämienkarten sind, die bei einer E-Commerce-Transaktion der Gutschrift zu Grunde gelegt werden.

4. Computersystem (5) nach einem der Ansprüche 1 bis 3, wobei es sich bei den mehreren Prämienkarten wenigstens teilweise um Prämienkarten verschiedener Anbieter handelt.

5. Computersystem (5) nach einem der Ansprüche 1 bis 4, wobei die mehreren Prämienkarten einem Kundenkonto des Karteninhabers oder einer anderen Person zugeordnet sind.

6. Computersystem (5) nach einem der Ansprüche 1 bis 5, wobei in das Prämiensystem Prämienkarten aus anderen Prämiensystemen integrierbar sind, indem sie bereits bestehenden proprietären Punktekonten als zusätzliche Prämienkarte/n zugeordnet werden, falls für den jeweiligen Kunden bereits ein proprietäres Punktekonto geführt wird.

7. Computersystem (5) nach einem der Ansprüche 1 bis 6, bei welchem sämtlichen zu einem Punktekonto gehörende Prämienkarten, denen eine persönliche Identifikationsnummer - PIN - zugeordnet ist, die gleiche PIN zugeordnet ist.

8. Computergestütztes Verfahren zum Management eines Prämiensystems, bei dem Kunden bei geschäftlichen Transaktionen Prämienpunkte erhalten mit folgenden Schritten:
- einem Punktekonto werden mehrere Prämienkarten zugeordnet;
- die Prämienpunkte, welche mit den den einen dem gemeinsamen Punktekonto zugeordneten Prämienkarten gesammelt werden, werden diesem gemeinsamen Punktekonto gutgeschrieben.

9. Computergestütztes Verfahren nach Anspruch 8, mit einem oder mehreren Merkmalen der Ansprüche 2 bis 7.

10. Computerprogramm-Produkt zur Ausführung des Verfahrens nach einem der Ansprüche 8 oder 9.

11. Computersystem (5) zum Management eines Prämiensystems, bei dem Kunden bei geschäftlichen Transaktionen Prämienpunkte erhalten, insbesondere nach einem der Ansprüche 1 bis 7, umfassend zwei Untersysteme:
ein operatives Untersystem, welches Punktekonten einzelner Kunden und/oder Prämienkarten, nicht jedoch detaillierte Transaktionseinzeldaten speichert; und
ein Datenauswertungs-Untersystem, welches detaillierte Transaktionseinzeldaten speichert, Kennzeichnungsdaten des Kunden bzw. der Prämienkarte, der bzw. die zu der jeweiligen Einzeltransaktion gehört, aber nur in verschlüsselter Form speichert.

12. Computersystem (5) nach Anspruch 11, bei welchem das operative Untersystem eine Datenbank zur Speicherung der operativen Daten und das Datenauswertungs-Untersystem eine andere Datenbank zur Speicherung der Transaktionseinzeldaten aufweist.

13. Computersystem (5) nach Anspruch 11 oder 12, bei welchem die beiden Untersysteme jeweils auf verschiedenen Computern beheimatet sind, die ggf. miteinander vernetzt oder vernetzbar sind.

14. Computersystem (5) nach einem der Ansprüche 11 bis 13, welches gesondert von dem Datenauswertungs-Untersystem Information zur Entschlüsselung der verschlüsselt gespeicherten Daten des Kunden bzw. der Prämienkarte gespeichert hält.

15. Computersystem (5) nach einem der Ansprüche 11 bis 14, bei welchem die Verschlüsselung darauf beruht, daß die Kunden bzw. Prämienkarten durch nicht aussagekräftige Verweisdaten gekennzeichnet sind, und die Entschlüsselungsinformation durch eine Zuordnung der Verweisdaten auf aussagekräftige Bezeichnungen des Kunden bzw. der Prämienkarte gegeben ist.

16. Computersystem (5) nach einem der Ansprüche 11 bis 15, bei welchem die Verschlüsselung auf Enkryption beruht, und die Entschlüsselungsinformation Dekryptionsschlüssel umfaßt.

17. Computersystem (5) nach einem der Ansprüche 11 bis 16, bei welchem das operative Untersystem (6) und/oder das Datenauswertungs-Untersystem (7) auch Profildaten von Kunden und/oder Prämienkarten speichert.

18. Computersystem (5) nach einem der Ansprüche 11 bis 16, welches eine Netzwerkverbindung zu einer Einrichtung zur Echtzeit-Kundenreaktion, beispielsweise einem Call-Center (16) oder einen Web-Server (10) aufweist, wobei aus der Einrichtung zur Echtzeit-Kundenbetreuung vorzugsweise nicht auf die Daten des Datenauswertungs-Untersystems (7) zugegriffen werden kann.

19. Computersystem (5) nach einem der Ansprüche 11 bis 17, bei welchem im Datenauswertungs-Untersystem (7) gespeicherte Daten ausgewertet werden und wenigstens ein Teil der Auswertungsergebnisse mit entschlüsselten Kunden- bzw. Prämienkartendaten im operativen Untersystem (6) gespeichert werden.

20. Computersystem (5) nach einem der Ansprüche 11 bis 18, bei welchem im Datenauswertungs-Untersystem (6) gespeicherte Daten ausgewertet werden und die Auswertungsergebnisse über eine Netzwerkverbindung einem externen Empfänger (11) zur Verfügung gestellt werden.

21. Verfahren zum Management von Prämien, die bei geschäftlichen Transaktionen von Kunden erworben werden,
wobei Prämienkonten, auf denen die von Kunden und/oder Prämienkarten erworbenen Prämienpunkte akkumuliert werden, in einem operativen Untersystem (6) geführt werden, das jedoch nicht gespeichert hält, und wobei
detaillierte Einzeltransaktionsdaten in einem Datenauswertungs-Untersystem (7) gespeichert werden, wobei Kennzeichnungsdaten des jeweiligen Kunden bzw. der jeweiligen Prämienkarte nur in verschlüsselter Form gespeichert werden.

22. Verfahren nach Anspruch 21, mit einem oder mehreren Merkmalen der Ansprüche 12 bis 20.
